# EUROPÄISCHE PATENTSCHRIFT

(11) **EP 3 038 735 B1**
(45) Veröffentlichungstag und Bekanntmachung des Hinweises auf die Patenterteilung: **25.04.2018**
(21) Anmeldenummer: 14772294.6
(22) Anmeldetag: 28.08.2014
(51) Int. Cl.: B01D 53/04, B01D 53/26, B60T 17/00, F15B 21/04

(54) **VERFAHREN UND EINRICHTUNG ZUR REGENERATION EINES ZWEIKAMMER-LUFTTROCKNERS MIT EINER NACHREGENERIERUNGSPHASE**
METHOD AND INSTALLATION FOR REGENERATING OF A TWIN AIR DRIER WITH POST REGENERATION PHASE
METHODE ET INSTALLATION POUR LA REGENERATION D'UN SECHAGE D'AIR A DEUX CHAMBRES ET PHASE DE POST-REGENERATION

(30) Priorität: 30.08.2013 DE 102013109476
(43) Veröffentlichungstag der Anmeldung: 06.07.2016
(73) Patentinhaber: KNORR-BREMSE Systeme für Schienenfahrzeuge GmbH, 80809 München (DE)
(72) Erfinder: KIPP, Thomas, 81547 München (DE); URRA, Christian, 81371 München (DE); MERKEL, Thomas, 50354 Hürth (DE); ASSMANN, Gert, 80337 München (DE)
(86) Internationale Anmeldenummer: PCT/EP2014/068217
(87) Internationale Veröffentlichungsnummer: WO 2015/028533

(56) Entgegenhaltungen:
- WO-A2-2013/150110
- US-A- 4 812 148

## Beschreibung

Die Erfindung betrifft ein Verfahren sowie eine Einrichtung zur Regeneration eines Adsorptionslufttrockners, der von mindestens zwei parallel zueinander geschalteten und mit Trockenmittel befüllten Trocknungsbehältern betrieben wird, wovon durch einen der Trocknungsbehälter in einer Trocknungsphase ein von einem Kompressor erzeugter feuchter Druckluftstrom getrocknet wird und der andere Trocknungsbehälter in einer gleichzeitigen Regenerationsphase durch einen trockenen Druckluftstrom zur Entwässerung des Trockenmittels durchströmt wird, wobei während des normalen Betriebs des Adsorptionslufttrockners ein ventilgesteuertes wechselseitiges Umschalten der Trocknungsbehälter zwischen Trocknungsphase und Regenerationsphase durchgeführt wird.

Das Einsatzgebiet der Erfindung erstreckt sich vornehmlich auf Druckluftsysteme für den Schienenfahrzeugbau. Hierbei erzeugt ein gewöhnlich in einem Zugfahrzeug angeordneter Kompressor Druckluft zum Antrieb der pneumatischen Bremsanlage und gegebenenfalls weiterer Aggregate. Darüber hinaus lässt sich die erfindungsgemäße Lösung auch auf Absorptionslufttrockner anderer Fahrzeuge anwenden, welche einen Wechselbetrieb zwischen Trocknungsphase und Regenerierungsphase ausführen.

Aus der DE 35 33 893 A1 geht ein Adsorptionslufttrockner, insbesondere für die Druckluftversorgung der Bremsanlagen von Fahrzeugen hervor, welche in Form einer Zwei-Kammer-Variante über zwei zueinander parallel geschaltete Trocknungsbehälter mit Trocknungsmittel verfügt. Diese werden abwechselnd während einer Trocknungs- und Regerationsphase parallel zueinander betrieben, um eine permanente Druckluftversorgung mit trockener Druckluft sicherzustellen. Die Umschaltung zwischen Trocknungsphase und Regenerationsphase erfolgt durch einen nach einem Zeittakt schaltbaren Ventilmechanismus, welcher wechselweise die vom Kompressor kommende, feuchte Druckluft in einen der Trocknungsbehälter einführt und jeweils vom anderen Trocknungsbehälter die bei der Regeneration verwendete Teilluftmenge ableitet. Der Ventilmechanismus besteht aus einem Schaltventil mit zwei im Gegentakt arbeitenden, durch ein einziges Magnetventil steuerbaren Einzelventilen.
Ferner offenbart US 4 812 148 A ein System zum Entfernen von Feuchtigkeit aus Druckluft in einem pneumatischen Bremssystem hervor, einschließlich eines Luftkompressors mit einem Auslass, der pneumatisch mit einem Einlass eines Kühlers verbunden ist. Der Kühler hat einen Auslass, der pneumatisch mit einem Paar elektromagnetischer Mehrweg-Steuerventile verbunden ist. Jedes der Ventile enthält einen Versorgungsabschnitt und einen Auspuffabschnitt. Ein Paar Trockenzylinder haben Einlässe, die selektiv pneumatisch mit den Zufuhr- und Abgasabschnitten des jeweiligen Paares von elektromagnetischen Mehrweg-Steuerventilen verbindbar sind. Die Einlässe eines Luftspeichers sind über ein jeweiliges Rückschlagventil mit den Auslässen der Trockenzylinder pneumatisch verbunden. Ein Regler ist pneumatisch mit dem Luftbehälter verbunden, um das Druckniveau im Luftbehälter zu erfassen. Eine Steuerschaltung ist elektrisch mit den beiden elektromagnetischen Mehrweg-Steuerventilen und dem Regler verbunden, um die Trockenzylinder zu einem vorgegebenen Zeitpunkt in den Trocknungs- und Regenerationszustand umschalten, wenn der Luftkompressor kontinuierlich länger als die vorgegebene Zeit arbeitet sowie in den gleichen Positionen zu bleiben, in denen sie vor dem Abschalten des Luftkompressors waren.

Eine weitere ähnliche Lufttrocknungseinrichtung geht aus der WO 2013/150110 A hervor. Die Lufttrocknungseinrichtung ist insbesondere für ein Schienenfahrzeug vorgesehen, und weist einen ersten und einen zweiten Lufttrocknerbehälter auf. Ferner weist die Lufttrocknungseinrichtung eine Luftzuführung auf, durch welche der Lufttrocknungseinrichtung zu trocknende Luft von einem Kompressor zuführbar ist. Darüber hinaus ist ein Luftausgang vorgesehen, welcher mit einem Vorratsbereich verbunden oder verbindbar ist. Die Lufttrocknungseinrichtung umfasst eine Regenerationsleitung, über welche Luft aus dem Vorratsbereich unter Umgehung des ersten Lufttrocknerbehälters und/oder des zweiten Lufttrocknerbehälters und/oder des Luftausgangs zur Luftzuführung führbar ist.

In der Praxis ergibt sich die Problemstellung, dass der normale Betrieb des Adsorptionslufttrockners nach Abstellen des Schienenfahrzeuges mit einer undefinierten Beladung durch Wasser im Trockenmittel unterbrochen wird. Durch die feuchte Lagerung verschleißt das Trockenmittel vorzeitig. Bei einem erneuten Betriebsstart des Schienenfahrzeuges und damit des Kompressorbetriebs bei Temperaturen unterhalb des Gefrierpunkts ist daher ein aufwendiges Vorheizen des Adsorptionslufttrockners erforderlich. Aufgrund dieser hinderlichen Startbedingungen steigt die Anfälligkeit für Betriebsstörungen, wie beispielsweise Eisbildung.

Es ist daher die Aufgabe der vorliegenden Erfindung, ein Verfahren sowie eine Einrichtung zur Regeneration eines Adsorptionslufttrockners zu schaffen, welches/welche mit einfachen technischen Mitteln Betriebsstörungen bei Betriebsstart vermeidet und eine längere Nutzung des Trockenmittels ermöglicht.

Die Aufgabe wird verfahrenstechnisch durch Anspruch 1 gelöst. Hinsichtlich einer hierzu korrespondierenden Einrichtung wird die Aufgabe durch Anspruch 4 gelöst. Die jeweils rückbezogenen abhängigen Ansprüche geben vorteilhafte Weiterbildungen der Erfindung wieder.

Die Erfindung schließt die verfahrenstechnische Lehre ein, dass zur Nachregeneration nach Beendigung des normalen Betriebs des Adsorptionslufttrockners, beim Abstellen des Fahrzeugs der sich bis dahin noch in der Regenerierungsphase befindliche Trocknungsbehälter durch eine weitere Durchströmung mit trockener Druckluft vollständig regeneriert wird und auch der sich bis dahin in der Trocknungsphase befindliche andere Trocknungsbehälter durch Umschaltung auf eine Durchströmung mit trockener Druckluft vollständig regeneriert wird, um den nächsten Betriebsstart des Fahrzeugs mit vollständig regeneriertem Trocknungsbehältern zu beginnen.

Mit anderen Worten werden beim Abstellen des Fahrzeuges die Trocknungsbehälter des Adsorptionslufttrockners vollständig regeneriert, wofür vorzugsweise die trockene Luft aus einem Vorratsluftbehälter genutzt wird.

Der Vorteil der erfindungsgemäßen Lösung liegt insbesondere darin, dass beim nächsten Betriebsstart des Fahrzeuges kein Vorheizen des Adsorptionslufttrockners mehr erforderlich ist. Durch die unverzüglich nach Beendigung des normalen Betriebs durchgeführte Entwässerung des Trockenmittels wird dessen Fähigkeit zur Wasseraufnahme geschont, was sich lebensdauerverlängernd auswirkt. Ferner wird der Druckluftverbrauch in der Phase des Betriebsstarts gesenkt und die Zeitdauer bis zur Fahrbereitschaft verkürzt.

Vorzugsweise wird während des normalen Betriebs des Adsorptionslufttrockners die zur Regeneration des sich in der Regenerationsphase befindlichen Trocknungsbehälters verwendete trockene Druckluft aus dem Hauptluftstrom abgezweigt, welcher den anderen in der Trocknungsphase befindlichen Trocknungsbehälter ausgangsseitig verlässt. Hierdurch kann die Regeneration während des normalen Betriebs ohne eine zusätzliche Bevorratung von trockener Druckluft durchgeführt werden.

Dem gegenüber wird nach Beendigung des normalen Betriebs die zur Nachregeneration der Trocknungsbehälter verwendete trockene Druckluft vorzugsweise aus dem von einem dem Adsorptionslufttrockner nachgeschalteten Vorratsdruckbehälter rückströmenden Hauptluftstrom abgezweigt. Somit kann für die erfindungsgemäße Nachregeneration der Trocknungsbehälter nach Beendigung des normalen Betriebs trockene Druckluft verwendet werden, welche im Vorratsdruckbehälter bevorratet ohnehin nicht mehr benötigt wird. Daraus ergibt sich eine effiziente Nachnutzung der bevorrateten Druckenergie.

Gemäß einer bevorzugten Ausführungsform der Erfindung mündet die aus beiden Trocknungsbehältern ausgangsseitig ausströmende trockene Druckluft in eine den Hauptluftstrom zum Vorratsdruckbehälter führende gemeinsame Druckluftleitung ein. Hierin vereint sich also die trockene Druckluft und kann zur Regenerationszwecken an dieser Stelle trocknungsbehälternahe entnommen werden. Um während der Regenerationsphase ein Rückströmen von trockener Druckluft über die hauptluftstromführende Druckluftleitung in die Trocknungsbehälter zu vermeiden, wird vorgeschlagen, dass in die Druckluftleitung ein Rückschlagventil eingesetzt wird. Die Rückschlagwirkung findet insoweit in Richtung Trocknungsbehälter statt.

Vorzugsweise geht von der hauptluftstromführenden Druckluftleitung im Bereich zwischen dem Rückschlagventil und dem Vorratsdruckbehälter eine Abzweigleitung ab, welche in die Trocknungsbehälter zur Regeneration des Trockenmittels einmündet.

Gemäß einer bevorzugten Ausführungsform ist eingangsseitig der Trocknungsbehälter eine Ventilanordnung zum wechselseitigen Umschalten der Trocknungsbehälter zwischen Trocknungsphase und Regenerationsphase angeordnet. Die Ventilanordnung kann als gemeinsamer Ventilblock zusammengefasst oder als Einzelventile pro Trocknungsbehälter ausgebildet sein. Vorzugsweise werden elektropneumatische Ventile verwendet, welche von einer zentralen elektronische Steuereinheit aus im Wechsel zwischen Trocknungsphase und Regenerationsphase betrieben werden. Während der Nachregeneration sollte sich die Ventilanordnung in der Schließstellung befinden.

Weitere die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: eine schematische Darstellung eines Adsorptionslufttrockners während des normalen Betriebs,
- Figur 2: eine schematisch Darstellung eines Adsorptionslufttrockners während der Nachregenerationsphase, und
- Figur 3: eine schematische Darstellung eines Adsorptionslufttrockners nach Beendigung der Nachregeneration der Trocknungsbehälter.

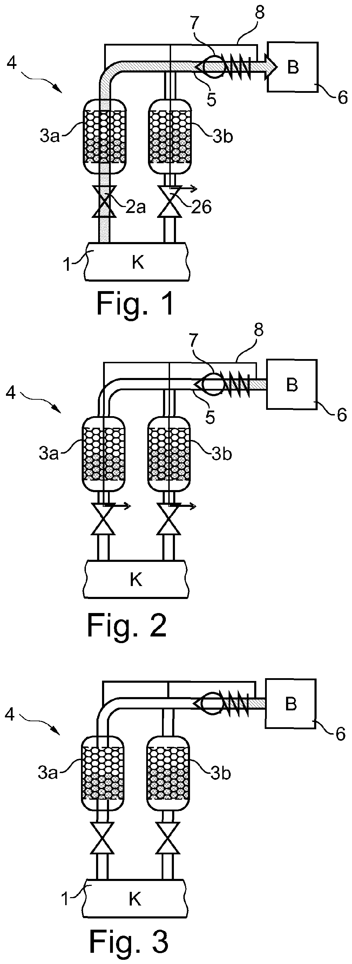

Gemäß Figur 1 fördert ein Kompressor während des normalen Betriebs eines Schienenfahrzeuges Druckluft über eine Ventilanordnung 2a, 2b wechselweise an einen von zwei Trocknungsbehältern 3a und 3b, welche Bestandteil eines Adsorptionslufttrockners 4 sind. Das Ventil 2a der Ventilanordnung stellt hier eine Verbindung zwischen dem Kompressor 1 und der Trocknungskammer 3a her, während die andere Trocknungskammer 3b in Folge des geschlossenen Ventils 2b der Ventilanordnung nicht mit dem Kompressor 1 in Verbindung steht, sondern zur Entlüftung der Trocknungskammer 3b mit der Atmosphäre verbunden ist.

Ausgangsseitig der Trocknungsbehälter 3a und 3b vereint eine Druckluftleitung 5 die beiden Teilluftbeströme der Trocknungsbehälter 3a und 3b zu einem Hauptluftstrom trockener Druckluft, welche in einem Vorratsdruckbehälter 6 eingeleitet wird.

In die Druckluftleitung 5 ist ein Rückschlagventil 7 mit Sperrwirkung in Richtung der Trocknungsbehälter 3a und 3b angeordnet, um während der Regenerierungsphase ein Rückströmen von trockener Druckluft über die hauptluftstromführende Druckleitung 5 in die Trocknungsbehälter 3a bzw. 3b zu vermeiden. Von der Druckluftleitung 5 geht im Bereich zwischen dem Rückschlagventil 7 und dem Vorratsdruckbehälter 6 eine Abzweigleitung 8 ab, welche in die Trocknungsbehälter 3a und 3b zu Zuführung trockener Druckluft zwecks Regeneration einmündet.

Von einer - nicht weiter dargestellten - elektronischen Steuerung wird die Ventilanordnung 2a und 2b zeit- oder bedarfsgesteuert umgeschaltet, um den Trocknungsbehälter 3a mit dann wassergesättigtem Trockenmittel von der Trocknungsphase in die Regenerationsphase umzuschalten. Gleichzeitig wird der sich in der Regenerationsphase befindliche andere Trocknungsbehälter 3b in die Trocknungsphase umgeschaltet, um eine kontinuierliche Förderung trockener Druckluft sicherzustellen. Dieser Wechsel wiederholt sich während des normalen Betriebs des Adsorptionslufttrockners und des diesen enthaltenen Fahrzeuges.

Gemäß Figur 2 wird nach dem Abstellen des Fahrzeugs, also nach Beendigung des normalen Betriebs, eine Nachregeneration beider Trocknungsbehälter 3a und 3b vorgenommen. Dementsprechend wird der sich bis dahin noch in der Regenerationsphase befindliche Trocknungsbehälter 3b mit trockener Druckluft vollständig fertig regeneriert, welche nach Beendigung des normalen Betriebs dem aufgefüllten Vorratsdruckbehälter 6 entnommen wird. Das Rückschlagventil 7 stellt dabei sicher, dass kein weiterer Druckverlust stattfindet, indem verhindert wird, dass Druckluft aus dem Vorratsdruckbehälter 6 über die Hauptluftleitung 5 zurück in die Trocknungsbehälter 3a und 3b gelangt.

Auch der sich bis zur Beendigung des normalen Betriebs in der Trocknungsphase befindliche andere Trocknungsbehälter 3a wird während der Nachregenerationsphase durch Umschaltung auf eine Durchströmung mit trockener Druckluft vollständig regeneriert. Somit wird gemäß Figur 3 sichergestellt, dass beim nächsten Betriebsstart des Fahrzeuges und des hierin angeordneten Adsorptionslufttrockners mit vollständig regenerierten Trocknungsbehältern 3a und 3b begonnen werden kann.

### Bezugszeichenliste

- 1: Kompressor
- 2: Ventilanordnung
- 3: Trocknungsbehälter
- 4: Adsorptionslufttrockner
- 5: Hauptluftleitung
- 6: Vorratsdruckbehälter
- 7: Rückschlagventil
- 8: Abzweigleitung

## Patentansprüche

1. Verfahren zur Regeneration eines Adsorbtionslufttrockners (4), der mit zwei parallel zueinander geschalteten und mit Trockenmittel befüllten Trocknungsbehältern (3a, 3b) betrieben wird, wovon durch einen der Trocknungsbehälter (3a) in einer Trocknungsphase ein von einem Kompressor (1) erzeugter feuchter Druckluftstrom getrocknet wird, und der andere Trocknungsbehälter (3b) in einer gleichzeitigen Regenerationsphase durch einen trockenen Druckluftstrom zur Entwässerung des Trockenmittels durchströmt wird, wobei während des normalen Betriebs ein ventilgesteuertes wechselseitiges Umschalten der Trocknungsbehälter (3a, 3b) zwischen Trocknungsphase und Regenerationsphase durchgeführt wird,
**dadurch gekennzeichnet, dass** zur Nachregeneration nach Beendigung des normalen Betriebes beim Abstellen des Fahrzeugs der sich bis dahin noch in der Regenerationsphase befindliche Trocknungsbehälter (3b) durch eine weitere Durchströmung mit trockener Druckluft vollständig regeneriert wird und auch der sich bis dahin in der Trocknungsphase befindliche andere Trocknungsbehälter (3a) durch Umschaltung auf eine Durchströmung mit trockener Druckluft vollständig regeneriert wird, um den nächsten Betriebsstart des Fahrzeugs mit vollständig regenerierten Trocknungsbehältern (3a, 3b) zu beginnen.

2. Verfahren nach Anspruch 1,
**dadurch gekennzeichnet, dass** während des normalen Betriebes die zur Regeneration des sich in der Regenerationsphase befindlichen Trocknungsbehälters (3b) verwendete trockene Druckluft aus dem Hauptluftstrom abgezweigt wird, welcher den anderen in der Trocknungsphase befindlichen Trocknungsbehälter (3a) ausgangsseitig verlässt.

3. Verfahren nach Anspruch 1,
**dadurch gekennzeichnet, dass** nach Beendigung des normalen Betriebes die zur Nachregeneration der Trocknungsbehälter (3a, 3b) verwendete trockene Druckluft aus dem von einem dem Adsorbtionslufttrockner (3a, 3b) nachgeschalteten Vorratsdruckbehälter (6) rückströmenden Hauptluftstrom abgezweigt wird.

4. Einrichtung zur Regeneration eines Adsorbtionslufttrockners (4) mit zwei parallel zueinander geschalteten mit Trockenmittel befüllten Trocknungsbehältern (3a, 3b), wovon in einer Trocknungsphase durch einen der Trocknungsbehälter (3a) ein von einem Kompressor (1) erzeugter feuchter Druckluftstrom strömt, und durch den anderen Trocknungsbehälter (3b) in einer gleichzeitigen Regenerationsphase ein trockener Druckluftstrom zur Entwässerung des Trockenmittels strömt, wobei eine Ventilanordnung (2a, 2b) zum wechselseitigen Umschalten der Trocknungsbehälter (3a, 3b) während des normalen Betriebs zwischen Trocknungsphase und Regenerationsphase vorgesehen ist,
**dadurch gekennzeichnet, dass** steuerungstechnische Mittel zur Durchführung einer Nachregenerationsphase gemäß Anspruch 1 vorgesehen sind.

## Claims

1. Method for the regeneration of an adsorption air dryer (4) which is operated by way of two drying containers (3a, 3b) which are connected in parallel to one another, are filled with drying agent, and of which a moist compressed air stream which is generated by a compressor (1) is dried by way of one of the drying containers (3a) in a drying phase, and the other drying container (3b) is flowed through in a simultaneous regeneration phase by a dry compressed air stream in order to dewater the drying agent, a valve-controlled two-way switchover of the drying containers (3a, 3b) between the drying phase and the regeneration phase being carried out during normal operation, **characterized in that**, for the subsequent regeneration, after ending of normal operation when the vehicle is switched off, the drying container (3b) which was still in the regeneration phase up to then is regenerated completely by way of a further throughflow with dry compressed air, and the other drying container (3a) which was in the drying phase up to then is also regenerated completely by way of a switchover to a throughflow with dry compressed air, in order to begin the next operating start of the vehicle with completely regenerated drying containers (3a, 3b).

2. Method according to Claim 1, **characterized in that**, during normal operation, the dry compressed air which is used for the regeneration of the drying container (3b) which is in the regeneration phase is branched off from the main air stream which leaves the other drying container (3a) which is in the drying phase on the outlet side.

3. Method according to Claim 1, **characterized in that**, after ending of normal operation, the dry compressed air which is used for the subsequent regeneration of the drying containers (3a, 3b) is branched off from the main air stream which flows back from a supply pressure reservoir (6) which is connected downstream of the adsorption air dryer (3a, 3b).

4. Device for the regeneration of an adsorption air dryer (4) having two drying containers (3a, 3b) which are connected in parallel to one another, are filled with drying agent, and of which a moist compressed air stream which is generated by a compressor (1) flows through one of the drying containers (3a) in a drying phase, and a dry compressed air stream flows through the other drying container (3b) in a simultaneous regeneration phase in order to dewater the drying agent, a valve arrangement (2a, 2b) being provided for the two-way switchover of the drying containers (3a, 3b) during normal operation between the drying phase and the regeneration phase, **characterized in that** control means are provided for carrying out a subsequent regeneration phase according to Claim 1.

## Revendications

1. Procédé de régénération d'un sécheur (4) d'air par adsorption, qui fonctionne avec deux récipients (3a, 3b) de séchage, montés en parallèle l'un à l'autre et emplis d'un agent desséchant, par lequel, par l'un des récipients (3a) de séchage, dans une phase de séchage, un courant d'air comprimé humide, produit par un compresseur (1), est desséché et l'autre récipient (3b) de séchage est, dans une phase de régénération simultanée, parcouru par un courant d'air comprimé sec pour déshydrater l'agent desséchant, dans lequel pendant le fonctionnement normal, on effectue une inversion réciproque commandée par vanne des récipients (3a, 3b) de séchage, entre phase de séchage et phase de régénération, **caractérisé en ce que** pour la post-régénération, après que le fonctionnement normal est achevé, à l'arrêt du véhicule, on régénère complètement le récipient (3b) de séchage se trouvant encore dans la phase de régénération, par un autre passage d'air comprimé sec et on régénère aussi complètement l'autre récipient (3a) de séchage se trouvant dans la phase de séchage, par inversion sur un passage par de l'air comprimé sec, pour commencer le type de fonctionnement suivant du véhicule en ayant les récipients (3a, 3b) de séchage régénérés complètement.

2. Procédé suivant la revendication 1,
**caractérisé en ce que** pendant le fonctionnement normal, on dérive l'air comprimé sec utilisé pour la régénération du récipient (3b) de séchage se trouvant dans la phase de régénération, du courant d'air principal, qui quitte du côté de la sortie l'autre récipient (3a) de séchage se trouvant dans la phase de séchage.

3. Procédé suivant la revendication 1,
**caractérisé en ce qu'**après que le fonctionnement normal est achevé, on dérive le courant d'air sec, utilisé pour la post-régénération des récipients (3a, 3b) de séchage, du courant d'air principal recyclé d'un réservoir (6) sous pression monté en aval de l'un des sécheurs (3a, 3b) d'air par absorption.

4. Dispositif de régénération d'un sécheur (4) d'air par absorption, comprenant deux récipients ((3a, 3b) de séchage, montés en parallèle l'un à l'autre et emplis d'un agent desséchant, dans lequel dans une phase de séchage, un courant d'air comprimé humide, produit par un compresseur, passe dans l'un des récipients (3a) de séchage, tandis que, par l'autre récipient (3b) de séchage, passe, dans une phase de régénération simultanée, un courant d'air comprimé sec pour déshydrater l'agent desséchant, dans lequel il est prévu un agencement (2a, 2b) de vanne pour l'inversion réciproque des récipients (3a, 3b) de séchage pendant le fonctionnement normal, entre une phase de séchage et une phase de régénération,
**caractérisé en ce qu'**il est prévu des moyens en technique de commande, pour effectuer une phase de post-régénération suivant la revendication 1.
